# EUROPEAN PATENT SPECIFICATION

(11) **EP 2 193 157 B1**
(45) Date of publication and mention of the grant of the patent: **15.08.2018**
(21) Application number: 08798676.6
(22) Date of filing: 26.08.2008
(51) Int. Cl.: C08G 65/00

(54) **FLUORINATED POLYETHERS AND POLYETHER OILS AND METHODS OF PREPARATION**
FLUORIERTE POLYETHER UND POLYETHERÖLE UND HERSTELLUNGSVERFAHREN
POLYÉTHERS FLUORÉS ET HUILES DE POLYÉTHER ET PROCÉDÉS DE PRÉPARATION

(30) Priority: 27.09.2007 US 975700 P
(43) Date of publication of application: 09.06.2010
(73) Proprietor: 3M Innovative Properties Company, St. Paul, MN 55133-3427 (US)
(72) Inventor: SCHWERTFEGER, Werner, D-84504 Burgkirchen (DE); HINTZER, Klaus, D-84504 Burgkirchen (DE); KASPAR, Harald, D-84504 Burgkirchen (DE); OBERMAIER, Egon, D-84504 Burgkirchen (DE)
(74) Representative: Kurz, Arnd
(86) International application number: PCT/US2008/074285
(87) International publication number: WO 2009/042331

(56) References cited:
- EP-A- 0 354 419
- GB-A- 1 294 657
- US-A- 3 525 724
- US-A- 5 798 417
- US-A- 6 046 368
- DATABASE WPI Week 198504 Thomson Scientific, London, GB; AN 1985-024737 XP002504377 & SU 1 100 277 A (SYKTYVKAR UNIV) 30 June 1984 (1984-06-30)

## Description

### CROSS-REFERENCE TO RELATED APPLICATION

This application claims the priority of U.S. Provisional Patent Application No. 60/975,700, filed September 27, 2008.

### SUMMARY

The present description relates to fluorinated polyethers and polyether oils and methods of preparation. In particular the present description relates to fluorinated polyether oils, which may contain end groups like esters, acid halides, acids, ethers or the like.

Fluorinated, especially highly fluorinated, polyethers and polyether oils have a number of industrial uses, including, for instance, as lubricating oils for high temperature applications. For these applications the initially made fluorinated polyether or polyether oils may be stabilized, for instance, by the introduction of appropriate end groups.

The present application provides, in one aspect, a process comprising reacting a vinyl ether of the formula (I) as given in claim 1

R_{f}-O-CF=CF₂ (I)

wherein R_{f} is a fluorinated linear or branched aliphatic group, with an oxygen-containing gas in the presence of a Lewis acid catalyst to yield a fluorinated polyether oil. The fluorinated polyether oil may be stabilized and / or end capped to enhance its performance in high temperature applications.

In another aspect, the present description provides a process comprising reacting a vinyl ether of of formula (I) as given in claim 1

R_{f}-O-CF=CF₂ (I)

wherein R_{f} is a fluorinated linear or branched aliphatic group, with an oxygen-containing gas in the presence of a graphite intercalated by a Lewis acid catalyst (such as SbF₅) to yield a fluorinated polyether oil.

### DETAILED DESCRIPTION

It has been found that fluorinated vinyl ethers may react with oxygen to yield fluorinated polyether oils. The reactions described herein may be carried out in the presence of an oxygen-containing gas and a Lewis acid catalyst. A process for the preparation of fluorinated carboxylic acid fluorides using oxygen and a lewis acid is disclosed in EP-A-0354419. Oxygen-containing gas includes, for instance, pure oxygen, oxygen diluted in a non-reactive carrier gas such as nitrogen, and air. Other oxygen delivering materials such as, for example, inorganic peroxo compounds may be used as well. vinyl ethers described herein are those having the the formula (I) as given in claim 1

R_{f}-O-CF=CF₂ (I)

wherein R_{f} is a fluorinated linear or branched aliphatic group. By aliphatic group, it is meant an alkyl group, an aryl group, a cycloalkyl group, an aralkyl group, a cyclic aralkyl group, and the like. Any of these groups may optionally be interrupted by one or more oxygen atoms. By "interrupted by one or more oxygen atoms", is meant that the aliphatic groups may contain ether linkages.

In particular fluorinated vinyl ethers described herein are those having an R_{f} according to the formula (III)

A-(OCF(R²_{f})CF₂)ₙ-(O(CF₂)ₘ)ₚ- (III)

where each n is from 0 to 10, each m is from 1 to 10, each p is from greater than 1 and up to 10, A is selected from X and XCₐF₂ₐ, where X is a halogen, hydrogen, or a functional group such as SO₂Y (with Y being F or Cl) or COOR' with R' being an alkyl group with 1 to 6 atoms and a is from 1 to 10, and R²_{f} is a fluorinated aliphatic group of from 1 to 10 carbon atoms. It should be understood that, as used in formula (III) where the phrase "each m is from 0 to 10" is used, it is meant that if p is greater than 1, then each value of m included in a repeated unit p is independently chosen from 1 to 10. Not all values of m in a given molecule need be the same. For instance, for a particular embodiment of formula (III):

CF₃-(OCF(CF₃)CF₂)ₙ-(OCF₂)-(OCF₂CF₂CF₂)-

p is equal to two, R²_{f} is CF₃, and therefore there are two values for m, in this instance, one is 1 and the other is 3. Accordingly, each is selected from 1 to 10, but not every value of m is the same.

In particular embodiments of formula (III), X may be F and a may be from 1 to 4. In such embodiments, the terminal chain length of the R_{f} group is not more than four carbons long. Examples of such embodiments include, for instance, CF₃-O-(CF₂)₃-O-, corresponding to the fluorinated vinyl ether CF₃-O-(CF₂)₃-O-CF=CF₂.

In yet further embodiments, X is F, a is from 1 to 4, and m is from 1 to 4. Other embodiments include those in which n is 0. In such cases, the corresponding vinyl ether is a linear vinyl ether that contains no R²_{f} groups.

Additional embodiments of formula (III), and thus the vinyl ethers of formula (I), include those wherein X is Br. When X is Br, for instance, the vinyl ether described can be further functionalized. Such further functionalization may take place either before or after the reaction of the vinyl ether of formula (I) to yield a fluorinated polyether oil.

Such further functionalization may include grafting onto a fluorinated polyether oil. Such grafting reactions may self-stabilize the fluorinated polyether oil. Accordingly, the result may be a functionalized fluorinated polyether oil containing grafted units. Such functionalized polymers may themselves be useful as surfactants in emulsion polymerization reactions of fluorinated monomers (optionally copolymerized with non-fluorinated monomers). One potential advantage to such functionalized fluorinated polyether oils may be that the resultant fluorinated polymers from the emulsion polymerization reactions may have low levels of extractable materials.

When X is Br, the resultant fluorinated polyether oils may further present an ability for the resultant fluorinated polyether oils to act as a surfactant in the polymerization of fluorinated monomers (optionally copolymerized with non-fluorinated monomers). Such brominated fluorinated polyether oils may act as a chain transfer agent in the polymerization reactions described. As a result, such polymerization reactions may lead to fluoropolymers of lower molecular weight than fluoropolymers prepared in the presence of non bromine-containing fluorinated polyether oils.

In further particular embodiments, X is F. When X is F, the fluorinated polyether oil may be relatively stable to further reactions.

The fluorinated vinyl ethers described by formula (I) and further described in formula (III) may be converted to a fluorinated polyether oil by reaction with an oxygen-containing gas in the presence of a catalytic amount of Lewis acid catalyst (which catalyst may be selected from, for instance, SbF₅, and may further intercalated into a non-reactive substance such as graphite). In some embodiments, the fluorinated vinyl ethers described by formula (I) may be converted to fluorinated polyether oils consisting of repeating fluorinated units and end groups according to one or more of the following formulae:

-(CF₂-CF(OR_{f})-O)- -(CF(O-R_{f})-O)- -(CF₂-O)- -O- -A -(COZ)

wherein R_{f} has the same meaning as above, A is perfluoroalkyl, perfluoroalkoxyalkyl, and Z may be halogen, especially fluorine, -OM wherein M may be a metal ion chosen from the group of e.g. alkali metal ion, and OR wherein R may consist of lower alkyl with up to 6 carbon atoms. The combination of the above described groups is random and thus may include peroxidic groups. The molecular weight of the fluorinated polyethers derived from the combination of the above described groups may be from 500 to up to 30000.

In yet further embodiments, the present description relates to reacting a plurality of chemically distinct vinyl ethers to provide the fluorinated polyether oils described herein. Such processes may include, for instance, methods wherein the fluorinated oil has the general formula:

A-(O)ₛ-(CF₂)ₜ-(CF₂-CF(OR)_{f}-O)ₚ-(CF(O-R_{f})-O)_{q}-(CF₂-O)ᵣ-(CF₂)ₜ-COZ

wherein each R_{f} is defined as above, A is R³f, with R³f being perfluoroalkyl or perfluoroalkoxyalkyl or COZ, p,q, and r are independently chosen from 0 to 100, s and t being independently 0 or 1 and Z is defined as above. The general formula is meant to illustrate the scope of functional groups which may be present in the fluorinated polyether oil but is not understood to be limiting to the actual scope of functional groups which may be considered by a person skilled in the art.

The processes described herein may include reacting the vinyl ethers described herein with one or more additional fluorinated monomers. In further embodiments, the additional fluorinated monomer is selected from hexafluoropropylene, tetrafluoroethylene, perfluoro(alkyl allyl)ether, perfluoro(alkoxyalkyl allyl)ether, and combinations thereof.

In particular embodiments wherein an additional fluorinated monomer is reacted with the vinyl ethers described, the fluorinated polyether oil may additionally contain repeating fluorinated units according to one or more of the following formulae:

-(CF₂CF₂-O)- -(CF(CF₃)CF₂-O)- -(CFCF₃-O)- -(CF(CF₂OR_{f})CF₂-O)-(CF(CF₂OR)-O)-

wherein each R_{f} is a fluorinated linear or branched aliphatic group which may contain ether links. The above described groups may be randomly incorporated in the general formula for the fluorinated polyether oil as shown below

A-(O)s-(CF₂)ₜ-(CF₂-CF(OR_{f})-O)ₚ-(CF(O-R_{f})-O)_{q}-(CF₂-O)ᵣ-(CF₂CF₂-O)ᵤ-(CF(CF₃)CF₂-O)ᵥ-(CFCF₃-O)_{w}-(CF(CF₂OR_{f})CF₂-O)ₓ-(CF(CF₂OR_{f})-O)_{y}-(CF₂)ₜ-COZ

wherein each of p, q, r, s, t, A, and Z independently has the same meaning as above and each of u, v, w, x, and y are independently chosen from 0 to 100.

The conclusion of reacting at a reaction temperature, a vinyl ether with an oxygen-containing gas, as described herein, may be characterized by a negligible exotherm and an unusual pressure increase indicating the cessation of consumption of the oxygen-containing gas by the reaction system. Another test for whether the end of the reaction has been reached may be a pressure drop after the oxygen line has been closed; so long as a pressure drop is observed, the reaction is not complete and the oxygen-containing gas may be further fed into the reaction system.

In the present processes, also produced in the reaction are co-products such as, for example, acid fluorides. Due to the toxicity and high reactivity of acid fluoride co-products, it may be preferable to carry out separation of the fluorinated polyether oil from other reaction co-products not on an acid fluoride itself, but on an acid fluoride derivative. Suitable derivatives are known to those skilled in the art and include carboxylic acids, esters, amides, and carboxylate salts.

The separation of the fluorinated polyether oils and the reaction co-products (such as acid fluorides) (sometimes referred to in the art as the "work up"), may include, for instance, first adding a nucleophilic compound capable of forming an acid fluoride derivative. For instance, to form an ester, an aliphatic alcohol may be added. To form a carboxylic acid or carboxylate salt, water may be added and the pH may be adjusted accordingly. To form an amide, ammonia or a primary or secondary an amine may be added.

In one embodiment, separation of the fluorinated polyether oils and co-products (such as acid fluorides) may be accomplished by pumping aqueous metal hydroxide (for instance, potassium or sodium hydroxide) solution into the reactor in an amount to ensure that the resultant pH value of the reactor is greater than 7 after the feed. In this embodiment, the reactor content separates into three phases. The lower most aqueous phase contains a carboxylate salt derivative of the acid fluoride. This later may be separated from the other two layers. Further reaction of the separated lower phase with methanol, water, and acid, followed by flash distillation, may result in a further two phase distillate. The upper phase of the distillate may be returned to the distillation flask, while the lower phase may be separated to yield the ester, for instance, by subsequent fractionation. In general, the work-up further yields a heavy phase with high viscosity which contains the desired fluorinated polyether oil.

Lewis acid catalysts described herein may be any type of Lewis acid catalyst known in the art. Such catalysts include, for instance, boron-containing Lewis acids. Boron-containing Lewis acids include those of the general formula BZ₃, where Z is selected from F and an alkoxide (e.g., BF₃, B(OCH₃)₃, etc). From a practical standpoint, one of ordinary skill in the art will recognize the preference to use Boron-containing Lewis acids with oxygen-containing solvents such as alcohols and ethers. The Boron-containing Lewis acids themselves may be a gas under normal handling conditions, such gas may give off toxic or otherwise undesirable fumes. Furthermore, the Lewis acid-solvent liquid complexes may be easier to handle.

In some embodiments, the Lewis acids may be intercalated into a non-reactive material. Such non-reactive materials include graphite. For instance, when the Lewis acid SbF₅ is used, it may be intercalated into graphite. Neat SbF₅ produces fumes and may not be easy to handle. Accordingly, by intercalating SbF₅ into graphite, the present invention provides a catalyst system that is easier and safer to handle than neat SbF₅. In some further embodiments, using a Lewis acid intercalated into a non-reactive material may allow for better temperature control during the reaction of the vinyl ether with the oxygen-containing gas, thereby avoiding or at least minimizing the resultant exotherm, putting less stress on the reactor system and allowing a more uniform reaction condition (e.g., avoiding localized heating and temperature spikes during reaction).

Surprisingly, the present description shows that such intercalated Lewis acid catalysts display suitable reactivity despite their intercalation into non-reactive media.

A catalytic amount of Lewis acid catalyst may be used in the processes described herein. A catalytic amount may be, for instance, from 0.01 to 20 mol%, based upon the amount of vinyl ether used in the reaction.

In one embodiment, the process relates to reacting a vinyl ether of formula (I) with an oxygen-containing gas or oxygen delivering substance like inorganic peroxides (also referred to herein as inorganic peroxo compounds) in the presence of a Lewis acid catalyst to yield a fluorinated polyether oil. In yet further embodiments, the reaction may be carried out at from -30°C to 200°C, from -20 °C to 150°C, or from -10°C to 100°C. In some embodiments, the temperature is kept as low as possible to yield reaction of the vinyl ether with the oxygen containing gas. Maintenance of a low temperature may help to inhibit explosion of the oxygen-containing reaction system (due to rapid exothermic heat generation, combustion of reactor constituents, or a combination thereof). Thus, in some embodiments, it may be preferred that the temperature of the reactor is controlled during the reaction. In particular, it may be preferred to keep the temperature of the reactor within 50°C of the starting temperature, within 30°C of the starting temperature, within 10°C of the starting temperature, even within 2°C of the starting temperature.

In other embodiments, when a catalytic amount of graphite intercalated by SbF₅ is used as the Lewis acid catalyst, control of the reaction temperature may not be as critical. However, it may be observed in some embodiments that the use of graphite intercalated by SbF₅ allows for a high degree of control over the reaction temperature, for instance, keeping the reaction temperature within 5°C of the starting temperature.

The oxygen pressure in the reactor is, in principle, not critical for the reaction and may vary from negligible amounts to several bar. But, according to the potential risk of explosion caused by the uncontrolled reaction of the vinyl ether with oxygen, it is preferred to keep the oxygen pressure as low as possible without limiting the rate of reaction.

In some embodiments, the processes described herein may yield improvements in the production of fluorinated polyether oils. For instance, the processes described herein may allow for improved conversion of vinyl ether to the corresponding fluorinated polyether oil. Furthermore, by allowing for better control of reaction temperature, some embodiments of the processes described herein lower the risk of explosion.

The fluorinated polyether oils made by the process described above may be used as such, but may also be stabilized before use to remove any existing peroxidic groups and to replace the end groups COZ by e.g. fluorine or halogen resulting in fluoroalkyl or halogen containing fluoroalkyl groups. Such stabilization may be carried out by methods described in the literature and is well known by persons skilled in the art. COZ end groups may be converted to amide end groups like CONH₂, CONHR, and CONR₂ by well known methods.

Applications of the fluorinated polyether oils include, optionally after further treatment according to the intended use, the use as oils, hydraulic liquids, heat carrier fluids, working fluids, coating materials, ionic liquids, and the like.

### EXAMPLES

### GENERAL DESCRIPTION OF THE PROCEDURE

The reactions were, unless otherwise noted, carried out in a stainless steel pressure vessel. The reactor was equipped with a stirrer, heating/cooling jacket, and temperature and pressure probes.

The dry reactor was flushed with nitrogen to remove oxygen. The vinyl ether was pumped into the reactor. The addition of the catalyst depended on the physical state of the compound. Solids were placed in the reactor before flushing with nitrogen, liquids were pumped in, and gases were added via a line directly from the cylinder.

Where noted, the reactor was pressurized with nitrogen to dilute the oxygen fed later.

The stirrer was started and adjusted to the desired speed rate.

After heating the reactor to the predetermined reaction temperature, oxygen was fed to the reactor. Usually less than 1 bar pressure increase was allowed on the initial oxygen feed.

Start of the reaction was indicated by an exotherm and pressure drop. The reaction generally did not start immediately. There was a delay observed which varied from several minutes to several hours.

As soon as the reaction had started, the oxygen feed was resumed. During the oxygen feed a pressure increase was observed which was not caused by the oxygen feed but mainly by the formation of fluorophosgene as side product.

The feed rate of oxygen was controlled to ensure a low oxygen content in the reactor. The end of the reaction was indicated by a negligible exotherm and an unusual pressure increase.

Another indicator for the end of reaction was a pressure drop upon closing the oxygen feed. As long as the pressure drop was observed, the reaction was continuing and thus the oxygen feed was resumed.

After the end of the oxygen feed, the reactor was cooled to room temperature followed by a work-up procedure. Due to the toxicity and the high reactivity of acid fluoride co-products, a direct purification of the acid fluorides was not desirable although it is in principle possible, e.g. by fractional distillation. If fractional distillation is used as work up procedure, the fluorinated polyether oil is separated as high boiling residue which may be converted further according to the desired stabilization procedure.

The following work-up procedures were used to separate the fluorinated polyether oil from the reaction mixture:
a) Aqueous potassium hydroxide solution was pumped into the reactor in an amount to ensure a pH value of greater than 7 after the feed. The reactor contents formed three phases. The two aqueous phases contain the fluorinated acid salt formed in the oxidation reaction and the potassium fluoride formed in the saponification reaction. The third phase consists of a heavy phase with high viscosity which contained the desired fluorinated polyether oil. The crude fluorinated polyether oil may be separated from the aqueous phases by phase separation.
b) Excess of alcohol (e.g. methanol) was pumped into the reactor at room temperature. The conversion caused an exotherm which was controlled by cooling. Addition of water resulted in two phases which were separated. The lower phase contained the fluorinated polyether in addition to fluorinated esters and acids. The lower phase was reacted with methanol, water, and sulphuric acid, followed by a flash distillation. After removal of the volatile fluoro-organic material by distillation, a two phase residue remained in the distillation flask. The lower viscous phase contains of the crude fluorinated polyether oil.
c) Alcohol was added to the reactor according to b). Trialkylamine (e.g. trimethylamine) was pumped into the reactor in a molar amount that was close to one third of the generated HF. Where indicated, water was further added to the mixture. The reaction mixture consisted of two phases. The lower phase contained the fluorinated polyether in addition to fluorinated esters and acids. The lower phase was reacted with methanol, water, and sulphuric acid, followed by a flash distillation. After removal of the volatile fluororganic material by distillation, a two phase residue remained in the distillation flask. The lower viscous phase contains of the crude fluorinated polyether oil.

### Example 1

4854 g CF3O(CF₂)₃OCF=CF₂ (MV31) was reacted with 304 g oxygen, and 10.5 g SbF₅/graphite (50% SbF₅) at 85 °C. Work up according to procedure b) including fractionation resulted in 264 g high boiling fluorinated polyether oil.

### Example 2

Example 1 was repeated using 3977 g MV31, 244 g oxygen, and 10.9 g SbF₅/graphite at 75 °C. Work up including fractionation resulted in 253 g high boiling fluorinated polyether oil. Viscosity of the degassed oil was 0.08 Pa*s at a shear rate of 20 1/s (20 °C).

### Example 3

3264 g MV31 was reacted with 200 g of oxygen. 18 g of BF₃ was used as catalyst. The reaction temperature was 80 °C. Work up according to method b) including fractionation resulted in 360 g high boiling fluorinated polyether oil. Viscosity of the degassed oil was 29 Pa*s at a shear rate of 20 1/s (20 °C).

### Example 4

Example 3 was repeated using 3734 g MV31, 220 g of oxygen and 14 g BF₃ at 75 °C. Work up according to method b) resulted 394 g high boiling fluorinated polyether oil.

### Example 5

Example 3 was repeated using 3582 g MV31, 240 g oxygen, and 14 g BF₃ at 85 °C. Work up according to method b) gave 405 g high boiling fluorinated polyether oil.

### Example 6

3778 g MV31, 228 g oxygen, and 4 g BF₃ were reacted at 85 °C. Work up according to method c) using 1558 g methanol and 642 g triethylamine, followed by a flash distillation of the lower phase resulted in 433 g of high boiling fluorinated polyether oil. Viscosity of the degassed oil was 4.1 Pa*s at a shear rate of 20 1/s and 3.9 at a shear rate of 50 1/s (20 °C).

### Example 7

3582g MV31 and 216g oxygen were reacted in the presence of 40g B(OCH₃)₃ and 60g of methanol at 85 °C. Work up by method c) using 1600g methanol and 640g triethylamine resulted in a two phase mixture. The phases were separated and the upper phase was diluted with about 20 weight% of water. The resulting lower phase was combined with the lower phase from the reactor resulting in a total amount of 3554g. Flash distillation in the presence of water methanol and sulphuric acid gave 322 g high boiling fluorinated oil.

### Example 8

3581 g MV31, 248 g oxygen, 16 g BF₃, and 9 g water were reacted at 85 °C. Work up with 1600 g methanol and 641 g triethylamine resulted in 3552 g lower phase after addition of water to the upper phase. Flash distillation according to Example 7 gave 403 g high boiling fluorinated oil isolated as lower phase after removal of all volatile fluoroorganic material.

### Example 9

3577 g MV31, 240 g oxygen, and 10 g BF₃ were reacted at 85 °C. The resulting acid fluoride containing mixture reacted at 20-40 °C with 3000 g of 40 % aqueous KOH (method a)) resulting in a three phase product mixture consisting of two aqueous phases and a heavy fluoroorganic phase. The aqueous phases were separated. The remaining non aqueous fluorinated phase contained fluorinated polyether oil.

### Example 10

87.9 kg MV31 was reacted with 5.5 kg oxygen in the presence of 554 g BF₃ and 100 g methanol at 85 °C. Work up was carried out according to c) using 39.25 kg methanol and 15.1 kg triethylamine. 12 kg of water was added to the reaction mixture while stirring. The lower phase of the resulting two phase mixture was separated (91.315 kg). An aliquot of 558g lower phase was flash distilled after addition of methanol, water, and sulphuric acid resulting in 79.5 g high boiling fluorinated polyether oil. This corresponds to a total amount of 13 kg oil in the lower phase.

### Example 11

3581 g MV31, 248 g oxygen, 20 g BF₃, and 52 g CH₃OCF₂CF₂H were reacted at 85 °C. Work up resulted in 403g high boiling fluorinated polyether oil.

### Thermal stability of the fluorinated oil from example 2

The crude fluorinated polyether oil recovered in Example 2 was degassed by gradually heating from 20 °C to 100 °C at 1 hPa pressure (4 h). A Sample 1 was taken and analyzed by F-NMR. The degassed oil was heated according to the following table. No apparent changes of the fluorinated oil were observed during the heating period. At 300 °C a small amount of volatile material (3 % of the total amount) was collected. Samples were taken according to the following list and analyzed by F-NMR spectroscopy (integration of ppm areas as given in the following table). The table indicates that there is no change in area up to 280 °C within the accuracy limits of NMR spectroscopy integration while there is a minor change at 300 °C

| | | |
|---|---|---|
| 100 °C at 1 hPa | | sample 1 |
| 110 - 260 °C, | 5 h + | |
| 260 °C | 1 h | sample 2 |
| 280 °C | 6 h | sample 3 |
| 300 °C | 6 h | sample 4 |

### Analytical results

| **Sample #** | **50-60 ppm** | **75-85 ppm** | **85-87 ppm** | **87-100 ppm** | **115-118 ppm** | **128-130 ppm** | **130-140 ppm** |
|---|---|---|---|---|---|---|---|
| | | | | | | | |
| Sample 1 | 100 | 6,2 | 43,6 | 4,8 | 0,1 | 23,8 | 0,0 |
| Sample 2 | 100 | 5,4 | 45,3 | 6,6 | 0,3 | 25,9 | 0,0 |
| Sample 3 | 100 | 5,9 | 44,6 | 6,3 | 0,4 | 25,4 | 0,0 |
| Sample 4 | 100 | 6,4 | 42,8 | 7,2 | 0,7 | 23,5 | 0,4 |

### Thermogravimetric analysis of crude fluorinated polyether oils

All thermogravimetric analyses were carried out in open crucibles. The following table shows the results. Heating rate was 10 °C per minute starting from room temperature. According to the results in the thermostability test, the observed weight loss below 300 °C is primarily due to evaporation instead of thermal degradation.

| **Fluorinated oil sample from** | **Weight loss 1 % at** | **Weight loss 10 % at** | **Weight loss 20 % at** | **Weight loss 100 % at** |
|---|---|---|---|---|
| | | | | |
| Example 2 | 92 °C | 196 °C | 223 °C | 356 °C |
| Example 3 | 214 °C | 298 °C | 317 °C | 362 °C |
| Example 6 | 163 °C | 302 °C | 325 °C | 343 °C |

## Claims

1. A process for preparing a fluorinated polyether oil comprising:
Reacting a vinyl ether monomer of the formula (I)
R_{f}-O-CF=CF₂ (I)
wherein R_{f} is a fluorinated linear or branched aliphatic group, with an oxygen-containing gas in the presence of a Lewis acid catalyst to yield a fluorinated polyether oil; wherein R_{f} is given by the formula (III)
A-(OCF(R²_{f})CF₂)ₙ-(O(CF₂)ₘ)ₚ- (III)
where each n is from 0 to 10; each m is from 1 to 10, each p is from greater than 1 and up to 10; A is selected from X and XCₐF₂ₐ, where X is selected from a halogen, hydrogen, and a functional group, the functional group selected from SO₂Y with Y being F or Cl, and COOR' with R' being an alkyl group having from 1 to 6 carbon atoms; and R²_{f} is a fluorinated aliphatic group of from 1 to 10 carbon atoms, and each value of m in a repeating unit p is independently chosen from 1 to 10, and a is from 1 to 10.

2. The process of claim 1, further comprising reacting the vinyl ether monomer with an additional fluorinated monomer to yield a fluorinated polyether oil.

3. The process of claim 1, wherein the fluorinated polyether oil comprises repeating units having the general formula
-(CF₂-CF₂(OR_{f})-O)-
wherein R_{f} is as defined in claim 1 and a is an integer of from 10 to 1000.

4. The process of claim 3, wherein the fluorinated polyether oil further comprises a repeating unit selected from (i) -(CF(OR_{f})-O)-; (ii) -(CF₂-O)-; (iii) -O-; and end groups selected from (iv) -A and (v) -(COZ); and (vi) combinations thereof, wherein each R_{f} is independently as defined in claim 1, A may consist of perfluoroalkyl, perfluoroalkoxyalkyl and -COZ, and each Z is independently selected from (a) a halogen; (b) -OM wherein M is a metal ion or a hydrogen; -NH₂, -NHR, -NR₂ and (c) -OR wherein R is an alkyl group having from 1 to 6 carbon atoms.

5. The process of claim 1, comprising reacting a plurality of chemically distinct vinyl ether monomers of formula (I).

6. The process of claim 5, wherein the fluorinated polyether oil has the general formula:
A-(O)s-(CF₂)ₜ-(CF₂-CF(OR_{f})-O)ₚ-(CF(O-R_{f})-O)_{q}-(CF₂-O)ᵣ-(CF₂)ₜ-COZ
wherein each R_{f} is independently as defined in claim 1; each A is defined as in claim 1; each of p, q, and r is independently chosen from 0 to 100; each of s and t is independently chosen from 0 or 1; and each Z is independently selected from (a) a halogen; (b) -OM wherein M is a metal ion or a hydrogen, -NH₂, -NHR, -NR₂; and (c) -OR wherein R is an alkyl group having from 1 to 6 carbon atoms, and where the sequence of the distinct repeating units is random.

7. The process of claim 1, wherein the fluorinated polyether oil has the general formula:
A-(O)s-(CF₂)ₜ-(OCF₂-CF(OR_{f})-O)ₚ-(CF(O-R_{f})-O)_{q}-(CF₂-O)ᵣ -(CF₂CF₂-O)ᵤ-(CF(CF₃)CF₂-O)ᵥ-(CFCF₃-O)_{w}-(CF(CF₂OR_{f})CF₂-O)ₓ-(CF(CF₂OR_{f})-O)_{y}-(CF₂)ₜ-COZ
wherein each R_{f} is independently as defined in claim 1; each A is defined as in claim 1; each of p, q, and r is independently chosen from 0 to 100; each of s and t is independently chosen from 0 or 1; each Z is independently selected from (a) a halogen; (b) -OM wherein M is a metal ion or a hydrogen, -NH₂, -NHR, -NR₂; and (c) -OR wherein R is an alkyl group having from 1 to 6 carbon atoms; each of u, v, w, x, and y is independently chosen from 0 to 100, and where the sequence of the distinct repeating units is random.

8. The process of claim 1, wherein the Lewis acid catalyst is a boron-containing Lewis acid catalyst given by the formula BZ₃, where Z is selected from F and an alkoxide.

9. The process of claim 8, wherein the boron-containing Lewis acid catalyst is present in an amount of from 0.01 to 20 mol% based upon the amount of vinyl ether reacted.

10. The process of claim 1 wherein the Lewis acid catalyst is intercalated in a non-reactive material.

11. The process of claim 10 wherein the non-reactive material is graphite.

12. The process of claim 10 wherein the Lewis acid catalyst is SbF₅.

13. The process of claim 1 wherein the reaction temperature is from 70 to 100°C.

## Patentansprüche

1. Verfahren zur Herstellung eines fluorierten Polyetheröls, umfassend:
Umsetzen eines Vinylether-Monomers mit der Formel (I)
R_{f}-O-CF=CF₂ (I),
worin es sich bei R_{f} um eine fluorierte lineare oder verzweigte aliphatische Gruppe handelt, wobei ein sauerstoffhaltiges Gas in Gegenwart eines Lewis-Säurekatalysators ein fluoriertes Polyetheröl ergibt; worin R_{f} angegeben wird durch die Formel (III)
A-(OCF(R²_{f})CF₂)ₙ-(O(CF₂)ₘ)ₚ- (III),
worin n jeweils von 0 bis 10 ist; m jeweils von 1 bis 10 ist, p jeweils größer als 1 und bis zu 10 ist; A ausgewählt ist aus X und XCₐF₂ₐ, worin X ausgewählt ist aus einem Halogen, Wasserstoff und einer funktionellen Gruppe, wobei die funktionelle Gruppe ausgewählt ist aus SO₂Y, wobei es sich bei Y um F oder Cl, und COOR' handelt, wobei R' eine Alkylgruppe mit 1 bis 6 Kohlenstoffatomen ist; und R²_{f} eine fluorierte aliphatische Gruppe mit 1 bis 10 Kohlenstoffatomen ist, und jeder Wert von m in einer wiederkehrenden Einheit p von 1 bis 10 unabhängig ausgewählt wird und a von 1 bis 10 ist.

2. Verfahren nach Anspruch 1, ferner umfassend das Umsetzen des Vinylether-Monomers mit einem zusätzlichen fluorierten Monomer, um ein fluoriertes Polyetheröl zu erhalten.

3. Verfahren nach Anspruch 1, wobei das fluorierte Polyetheröl wiederkehrende Einheiten umfasst mit der allgemeinen Formel
-(CF₂-CF₂(OR_{f})-O)-,
worin R_{f} wie in Anspruch 1 definiert ist und es sich bei a um eine ganze Zahl von 10 bis 1000 handelt.

4. Verfahren nach Anspruch 3, wobei das fluorierte Polyetheröl ferner eine wiederkehrende Einheit umfasst, ausgewählt aus (i) -(CF(ORf)-O)-; (ii) -(CF₂-O)-; (iii) -O-; und Endgruppen ausgewählt aus (iv) -A und (v) -(COZ); und (vi) Kombinationen davon, wobei R_{f} jeweils unabhängig, wie in Anspruch 1 definiert, ist, A aus Perfluoralkyl, Perfluoralkoxyalkyl und -COZ bestehen kann, und Z jeweils unabhängig ausgewählt ist aus (a) einem Halogen; (b) -OM, wobei es sich bei M um ein Metallion oder einen Wasserstoff, -NH₂, -NHR, -NR₂ handelt und (c) -OR, wobei es sich bei R um eine Alkylgruppe mit 1 bis 6 Kohlenstoffatomen handelt.

5. Verfahren nach Anspruch 1, umfassend das Umsetzen einer Mehrzahl chemisch unterschiedlicher Vinylether-Monomere der Formel (I).

6. Verfahren nach Anspruch 5, wobei das fluorierte Polyetheröl folgende allgemeine Formel aufweist:
A-(O)_{S}-(CF₂)ₜ-(CF₂-CF(OR_{f})-O)ₚ-(CF(O-R_{f})-O)_{q}-(CF₂-O)ᵣ-(CF₂)ₜ-COZ,
worin R_{f} jeweils unabhängig, wie in Anspruch 1 definiert, ist; A jeweils wie in Anspruch 1 definiert ist; p, q und r jeweils unabhängig aus 0 bis 100 ausgewählt sind; s und t jeweils unabhängig aus 0 oder 1 ausgewählt sind; und Z jeweils unabhängig aus (a) einem Halogen ausgewählt ist; (b) -OM, wobei es sich bei M um ein Metallion oder einen Wasserstoff, -NH₂, -NHR, -NR₂ handelt und (c) -OR, wobei es sich bei R um eine Alkylgruppe mit 1 bis 6 Kohlenstoffatomen handelt und wobei die Sequenz der unterschiedlichen wiederkehrenden Einheiten zufällig ist.

7. Verfahren nach Anspruch 1, wobei das fluorierte Polyetheröl folgende allgemeine Formel aufweist:
A-(O)_{S}-(CF₂)ₜ-(OCF₂-CF(OR_{f})-O)ₚ-(CF(O-R_{f})-O)_{q}-(CF₂-O)ᵣ-(CF₂CF₂-O)ᵤ-(CF(CF₃)CF₂-O)ᵥ-(CFCF₃-O)_{w}-(CF(CF₂OR_{f})CF₂-O)ₓ-(CF(CF₂OR_{f})-O)_{y}-(CF₂)ₜ-COZ,
worin R_{f} jeweils unabhängig, wie in Anspruch 1 definiert, ist; A jeweils wie in Anspruch 1 definiert ist; p, q und r jeweils unabhängig aus 0 bis 100 ausgewählt sind; s und t jeweils unabhängig aus 0 oder 1 ausgewählt sind; und Z jeweils unabhängig aus (a) einem Halogen ausgewählt ist; (b) -OM, wobei es sich bei M um ein Metallion oder einen Wasserstoff, -NH₂, -NHR, -NR₂ handelt; und (c) -OR, wobei es sich bei R um eine Alkylgruppe mit 1 bis 6 Kohlenstoffatomen handelt; u, v, w, x und y jeweils unabhängig aus 0 bis 100 ausgewählt sind und wobei die Sequenz der unterschiedlichen wiederkehrenden Einheiten zufällig ist.

8. Verfahren nach Anspruch 1, wobei es sich bei dem Lewis-Säurekatalysator um einen borhaltigen Lewis-Säurekatalysator handelt, der durch die Formel BZ₃ angegeben wird, wobei Z aus F und einem Alkoxid ausgewählt ist.

9. Verfahren nach Anspruch 8, wobei der borhaltige Lewis-Säurekatalysator in einer Menge von 0,01 bis 20 Mol-%, basierend auf der Menge des umgesetzten Vinylethers, vorliegt.

10. Verfahren nach Anspruch 1, wobei der Lewis-Säurekatalysator in einem nicht reaktiven Material eingelagert ist.

11. Verfahren nach Anspruch 10, wobei es sich bei dem nicht reaktiven Material um Graphit handelt.

12. Verfahren nach Anspruch 10, wobei es sich bei dem Lewis-Säurekatalysator um SbF₅ handelt.

13. Verfahren nach Anspruch 1, wobei die Reaktionstemperatur zwischen 70 und 100 °C beträgt.

## Revendications

1. Procédé de préparation d'une huile de polyéther fluorée, comprenant :
la réaction d'un monomère d'éther vinylique de formule (I)
R_{f}-O-CF=CF₂ (I)
dans lequel R_{f} est un groupe aliphatique linéaire ou ramifié fluoré, avec un gaz contenant de l'oxygène en présence d'un catalyseur acide de Lewis pour donner une huile de polyéther fluorée ; dans lequel R_{f} est donné par la formule (III)
A-(OCF(R²_{f})CF₂)ₙ-(O(CF₂)ₘ)ₚ- (III)
où chaque n va de 0 à 10 ; chaque m va de 1 à 10, chaque p va de plus de 1 et jusqu'à 10 ; A est choisi parmi X et XCₐF₂ₐ, où X est choisi parmi un halogène, l'hydrogène et un groupe fonctionnel, le groupe fonctionnel étant choisi parmi SO₂Y avec Y étant F ou Cl, et COOR' avec R' étant un groupe alkyle ayant de 1 à 6 atomes de carbone ; et R²_{f} est un groupe aliphatique fluoré allant de 1 à 10 atomes de carbone, et chaque valeur de m dans un motif de répétition p est indépendamment choisie parmi 1 à 10, et a va de 1 à 10.

2. Procédé selon la revendication 1, comprenant en outre la réaction du monomère d'éther vinylique avec un monomère fluoré supplémentaire pour donner une huile de polyéther fluorée.

3. Procédé selon la revendication 1, dans lequel l'huile de polyéther fluorée comprend des motifs de répétition ayant la formule Générale
-(CF₂-CF₂(OR_{f})-O)-
dans lequel R_{f} est tel que défini dans la revendication 1 et a est un nombre entier allant de 10 à 1000.

4. Procédé selon la revendication 3, dans lequel l'huile de polyéther fluorée comprend en outre un motif de répétition choisi parmi (i) -(CF(OR_{f})-O)- ; (ii) -(CF₂-O)- ; (iii) -O- ; et des groupes terminaux choisis parmi (iv) -A et (v) - (COZ) ; et (vi) des combinaisons de ceux-ci, dans lequel chaque R_{f} est indépendamment tel que défini dans la revendication 1, A peut être constitué de perfluoroalkyle, perfluoroalcoxyalkyle et -COZ, et chaque Z est indépendamment choisi parmi (a) un halogène ; (b) -OM dans lequel M est un ion métallique ou un hydrogène ; -NH₂, -NHR, -NR₂ et (c) -OR dans lequel R est un groupe alkyle ayant de 1 à 6 atomes de carbone.

5. Procédé selon la revendication 1, comprenant la réaction d'une pluralité de monomères d'éther vinylique chimiquement distincts de formule (I).

6. Procédé selon la revendication 5, dans lequel l'huile de polyéther fluorée a la formule générale :
A-(O)_{S}-(CF₂)ₜ-(CF₂-CF(OR_{f})-O)ₚ-(CF(O-R_{f})-O)_{q}-(CF₂-O)ᵣ-(CF₂)ₜ-COZ
dans lequel chaque R_{f} est indépendamment tel que défini dans la revendication 1 ; chaque A est défini comme dans la revendication 1 ; chacun de p, q et r est indépendamment choisi parmi 0 à 100 ; chacun de s et t est indépendamment choisi parmi 0 ou 1 ; et chaque Z est indépendamment choisi parmi (a) un halogène ; (b) -OM dans lequel M est un ion métallique ou un hydrogène, -NH₂, -NHR, -NR₂ ; et (c) -OR dans lequel R est un groupe alkyle ayant de 1 à 6 atomes de carbone, et où la séquence des motifs de répétition distincts est aléatoire.

7. Procédé selon la revendication 1, dans lequel l'huile de polyéther fluorée a la formule générale :
A-(O)_{S}-(CF₂)ₜ-(OCF₂-CF(OR_{f})-O)ₚ-(CF(O-R_{f})-O)_{q}-(CF₂-O)ᵣ-(CF₂CF₂=O)ᵤ-(CF(CF₃)CF₂=O)ᵥ-(CFCF₃-O)_{w}-(CF(CF₂OR_{f})CF₂-O)ₓ-(CF(CF₂OR_{f})-O)_{y}-(CF₂)ₜ-COZ
dans lequel chaque R_{f} est indépendamment tel que défini dans la revendication 1 ; chaque A est défini comme dans la revendication 1 ; chacun de p, q et r est indépendamment choisi parmi 0 à 100 ; chacun de s et t est indépendamment choisi parmi 0 ou 1 ; chaque Z est indépendamment choisi parmi (a) un halogène ; (b) -OM dans lequel M est un ion métallique ou un hydrogène, - NH₂, -NHR, -NR₂ ; et (c) -OR dans lequel R est un groupe alkyle ayant de 1 à 6 atomes de carbone ; chacun de u, v, w, x et y est indépendamment choisi parmi 0 à 100, et où la séquence des motifs de répétition distincts est aléatoire.

8. Procédé selon la revendication 1, dans lequel le catalyseur acide de Lewis est un catalyseur acide de Lewis contenant du bore donné par la formule BZ₃, où Z est choisi parmi F et un alcoxyde.

9. Procédé selon la revendication 8, dans lequel le catalyseur acide de Lewis contenant du bore est présent en une quantité allant de 0,01 à 20 % molaires sur la base de la quantité d'éther vinylique que l'on fait réagir.

10. Procédé selon la revendication 1, dans lequel le catalyseur acide de Lewis est intercalé dans un matériau non réactif.

11. Procédé selon la revendication 10, dans lequel le matériau non réactif est du graphite.

12. Procédé selon la revendication 10, dans lequel le catalyseur acide de Lewis est SbF₅.

13. Procédé selon la revendication 1, dans lequel la température de réaction va de 70 à 100 °C.
